Europäisches Patentamt

European Patent Office

Office européen des brevets

(11) Veröffentlichungsnummer: **0 120 323**
**B1**

(12) ## EUROPÄISCHE PATENTSCHRIFT

(45) Veröffentlichungstag der Patentschrift:
17.09.86

(51) Int. Cl.⁴: **H 04 L 11/20,** H 04 L 11/00

(21) Anmeldenummer: **84102041.5**

(22) Anmeldetag: **27.02.84**

(54) **Anordnung zur Übertragung von Daten zwischen einer Datenverarbeitungsanlage und mehreren Datenendeinrichtungen im lokalen Bereich über festgelegte Schnittstellen.**

(30) Priorität: **28.02.83 DE 3306942**

(43) Veröffentlichungstag der Anmeldung:
**03.10.84 Patentblatt 84/40**

(45) Bekanntmachung des Hinweises auf die Patenterteilung:
**17.09.86 Patentblatt 86/38**

(84) Benannte Vertragsstaaten:
**AT BE CH FR GB IT LI NL SE**

(56) Entgegenhaltungen:
EP - A - 0 011 540
EP - A - 0 021 917
AT - B - 364 407
BE - A - 731 244

ELEKTRONIK, Band 29, Nr. 7, April 1980, Seiten 64-69, München, DE. H. FRÖHLICH: "Datenpaketvermittlung und HDLC-Datenübertragungs-Prozedur", Teil 1
Idem.
ELEKTRONIK, Band 29, Nr. 8, April 1980, Seiten 89-93, München, DE. H. FRÖHLICH: "Datenpaketvermittlung und HDLC-Datenübertraguns-Prozedur", Teil 2

(73) Patentinhaber: **Siemens Aktiengesellschaft Berlin und München, Wittelsbacherplatz 2, D-8000 München 2 (DE)**

(72) Erfinder: **Bäker, Wolfgang, Ing. grad., Karl-Witthalm-Strasse 9, D-8000 München 70 (DE)**
Erfinder: **Meissner, Holger, Dr. Dipl.-Ing., Reussweg 26, D-8000 München 60 (DE)**
Erfinder: **Schubert, Günther, Dipl.-Ing., Platanenstrasse 148, D-8028 Taufkirchen (DE)**

ACTORUM AG

**Beschreibung**

Die Erfindung betrifft eine Anordnung zur Übertragung von Daten zwischen einer Datenverarbeitungsanlage und mehreren Datenendeinrichtungen im lokalen Bereich über festgelegte Schnittstellen unter Verwendung eines an die Ausgabeeinrichtung der Datenverarbeitungsanlage angeschlossenen Netzknotens mit einer genormten Prozedur, z.B. HDLC, bei der die Adressen der jeweils gewünschten Datenendeinrichtung in den übertragenen Daten enthalten sind und jede Datenendeinrichtung jeweils nur nach Aufruf durch die Datenverarbeitungsanlage Daten zu dieser sendet.

Es ist allgemein bekannt, Datenverbindungen über Netzknoten zu führen, um Übertragungsleitungen und Übertragungseinrichtungen einzusparen. Netzknoten können ausser als umfangreiche Vermittlungsanlage auch als Konzentratoren oder Schnittstellenvervielfacher ausgebildet sein, über die die Anschlussleitungen der einzelnen Datenendeinrichtungen Zugriff zu einer gemeinsamen Verbindungsleitung haben, die an eine Datenverarbeitungsanlage oder eine Vermittlungsanlage angeschlossen ist.

Während es sich bei den Konzentratoren um schaltbare Netzknoten handelt, die gesteuerte Einrichtungen zur Verbindungsherstellung aufweisen, handelt es sich bei den Schnittstellenvervielfachern um nichtschaltbare Netzknoten, bei denen die Signale von der einen Schnittstelle auf der einen Seite zu allen übrigen Schnittstellen auf der anderen Seite und Signale in umgekehrter Richtung von den einzelnen Schnittstellen der einen Seite nur zur einzigen Schnittstelle der anderen Seite geführt werden. In beiden Fällen können auf beiden Seiten des Netzknotens Datenübertragungseinrichtungen angeschaltet sein, so dass das Übertragungsverfahren frei wählbar ist und grössere Entfernungen überbrückt werden können.

Der Aufwand für als Schnittstellenvervielfacher ausgebildete Netzknoten ist am geringsten. Der Einsatz von Schnittstellenvervielfachern setzt jedoch eine Aufrufprozedur voraus, d.h. von einer Datenverarbeitungsanlage als einzige Datenendeinrichtung auf der einen Seite wird gleichzeitig an alle Datenendeinrichtungen auf der anderen Seite gesendet, während letztere nur nacheinander nach Aufforderung in Gegenrichtung senden dürfen - P.Bocker: «Datenübertragung», 1978, Bd. 1, Abschn. 6.1.1; Bd. 2, Abschn. 8.1.1 und 8.1.2.

Dieser Prozedur entspricht z.B. die bekannte und international genormte HDLC-Prozedur für Mehrpunktverbindungen - ISO 6159 - 1980 (E) in Verbindung mit ISO 3309 - 1979 (E), die sich durch hohe Sicherheit auszeichnet und in Verbindung mit den oben genannten Schnittstellenvervielfachern und mit HDLC-prozedurfähigen Datenstationen ohne Schwierigkeiten einsetzbar ist.

Von Nachteil ist jedoch, dass bei direktem Anschluss von Datenstationen an einen Schnittstellenvervielfacher ohne zwischengeschaltete Modems die überbrückbaren Entfernungen verhältnismässig klein sind, z.B. nur 20 m betragen. Will man dagegen Entfernungen bis zu 2 km zulassen, werden Modems notwendig, die einen zusätzlichen Aufwand darstellen.

Es ist daher Aufgabe der Erfindung, ausgehend von einer Anordnung mit Schnittstellenvervielfacher und Anschluss der Datenendeinrichtungen über Modems eine weniger aufwendige Anordnung zu schaffen, die Entfernungen zu den Datenendeinrichtungen bis zu 2 km und damit eine grössere Entfernungsunabhängigkeit im lokalen Anschlussbereich zulässt. Diese Aufgabe wird ausgehend von der eingangs genannten Anordnung durch die kennzeichnenden Merkmale des Patentanspruches 1 gelöst.

Bei der Anordnung gemäss der Erfindung werden also die auf der Datenendeinrichtungsseite des Schnittstellenvervielfachers notwendigen Modems in den Schnittstellenvervielfacher integriert, wobei die Durchschaltung der von den Datenendeinrichtungen kommenden Leitungen zur Datenverarbeitungsanlage nicht mehr durch Schnittstellensignale, z.B. Signal 109 gemäss CCITT-Empfehlung V.24 oder M5 gemäss DIN 66020, der Datenendeinrichtungen bzw. der Modem erfolgt, sondern durch die in den Sendedaten der Datenverarbeitungsanlage enthaltenen Datenendeinrichtungsadressen gesteuert wird. Diese Integration der Modem in den Schnittstellenvervielfacher ermöglicht damit die Zentralisierung der in jedem Modem notwendigen Modulations- und Demodulationseinrichtungen und die Reduzierung der Signalleitungen zu den mit den Endeinrichtungen gekoppelten Modems, da ausser den Datenleitungen alle übrigen Steuerleitungen der sonst üblichen Schnittstellen am Schnittstellenvervielfacher entfallen.

Arbeiten gemäss einer Weiterbildung der Erfindung die Modulations- und Demodulationseinrichtungen entsprechend einem der bekannten Basisbandübertragungsverfahren, z.B. dem «Coded-Diphase»-Verfahren, dann sind auch einfache Leitungen, z.B. Telefonleitungen, mit hohen Übertragungsgeschwindigkeiten bei galvanischer Trennung zwischen Schnittstellenvervielfacher und Datenendeinrichtungen verwendbar.

Durch zusätzliche Steuerschalter besteht die Möglichkeit, ausgehend von einer einheitlichen hohen Datenübertragungsgeschwindigkeit auf den Anschlussleitungen zu den Datenendeinrichtungen die Übertragungsgeschwindigkeit auf den Schnittstellenleitungen zur Datenverarbeitungsanlage durch voreinstellbare Steuerschalter anzupassen, entsprechend dem Verhältnis beider Übertragungsgeschwindigkeiten ein Sendebit der Datenverarbeitungsanlage in jeweils entsprechend viele Übertragungsbits bzw. entsprechend viele Übertragungsbits in ein Empfangsbit für die Datenverarbeitungsanlage umzuwandeln und den zur Datenverarbeitungsanlage gesendeten Sende- und Empfangstakt entsprechend zu ändern.

Bei Anwendung des bekannten HDLC-Verfahrens gemäss einer anderen Weiterbildung der Erfindung sind für die Adressenauswerteeinrichtung zwei in Reihe geschaltete Schieberegister für jeweils 8 Bit vorgesehen, wobei jedes Schieberegister mit einem voreingestellten Vergleicher gekoppelt ist, von denen der eine in Verbindung mit dem zweiten nachgeschalteten Schieberegister bei Vorliegen eines Blockbegrenzungszeichens und der andere in Verbindung mit dem ersten Schieberegister beim Nichtvorliegen eines Blockbegrenzungszeichens oder einer Dauer-Eins ein Steuersignal liefert, und wobei bei gleichzeitigem Auftreten der Steuersignale beider Vergleicher die im ersten Register enthaltene Information als Adresse in ein drittes Register übernommen wird, das die Einstellung des Leitungsauswahlschalters steuert. Damit erfolgt eine Umschaltung des Leitungsauswahlschalters, nur wenn diese erforderlich ist.

Diese und weitere Einzelheiten der Erfindung seien nachfolgend anhand eines in der Zeichnung dargestellten Ausführungsbeispieles näher erläutert. Im einzelnen zeigen:

Fig. 1 ein Übersichtsschaltbild,

Fig. 2 ein Blockschaltbild des bei der Anordnung nach Fig. 1 verwendeten Netzknotens,

Fig. 3 ein Impulsdiagramm zur Erläuterung der Geschwindigkeitsanpassung für die Datenübertragung,

Fig. 4 Teile eines Datenübertragungsblockes beim HDLC-Verfahren und

Fig. 5 ein Blockschaltbild der Adressenauswerteeinrichtung von Fig. 2.

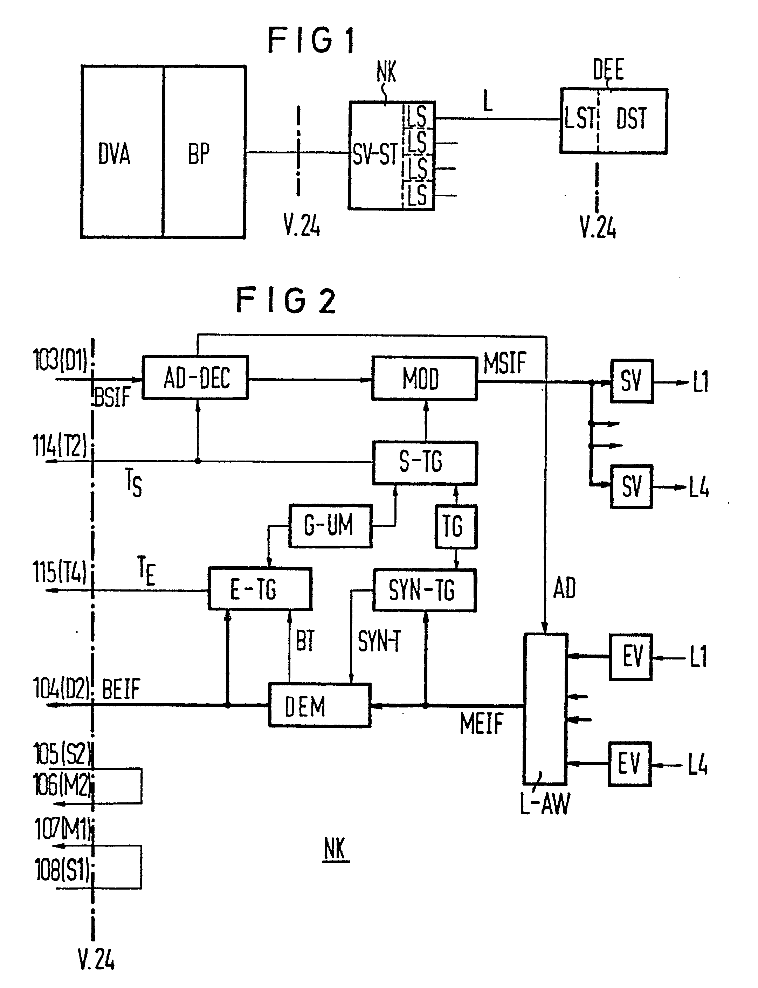

Fig. 1 zeigt in Form eines Übersichtsschaltbildes eine Datenverarbeitungsanlage DVA mit einem Leitungsblockpuffer BP als Ein-/Ausgabeeinrichtung, der über die genormte Schnittstelle V.24 entsprechend den CCITT-Empfehlungen mit einem Netzknoten NK verbunden ist, an den über individuelle Anschlussleitungen L Datenendeinrichtungen DEE angeschlossen sind. Der Netzknoten NK erfüllt die Funktion eines Schnittstellenvervielfachers, bei dem aber entsprechend der Erfindung die Modemfunktion für die einzelnen Anschlussleitungen L integriert ist. Der Netzknoten NK gliedert sich daher in einen zentralen Steuerteil SV-ST und leitungsindividuelle Leitungsschaltungen LS. Entsprechend ist der jeweils angeschlossenen Datenstation als Datenendeinrichtung ein Leitungssteuerteil L-ST vorgeschaltet, das die Modemfunktion auf der Gegenseite der Anschlussleitung wahrnimmt und mit der Datenstation DST ebenfalls über die Schnittstelle V.24 verbunden ist.

Da der Netzknoten NK im Prinzip wie ein Schnittstellenvervielfacher arbeitet, brauchen lediglich die über die Schnittstellen V.24 erreichbaren Einrichtungen also der Blockpuffer BP und die Datenstationen DST, bezüglich der anzuwendenden Prozedur aufeinander abgestimmt zu sein. Bei Anwendung der «Unbalanced»-Form der HDLC-Prozedur arbeiten Blockpuffer BP und der Netzknoten NK zusammen als «Primary-Station» und die Datenendeinrichtungen DEE als «Secondary-Station».

Die Verwendung von Blockpuffern BP als Ein-/Ausgabeeinrichtungen von Datenverarbeitungsanlagen ist bekannt - z.B. telcom report 1 (1978), Heft 3, Seiten 164 bis 169.

Der neue Aufbau des Netzknotens ist in Fig. 2 gezeigt. Die auf der Sendedatenleitung 103 entsprechend der CCITT-Empfehlung V.24 oder D1 entsprechend der DIN 66020 eintreffenden beniären Sendeinformationen BSIF werden über eine Adressenauswerteschaltung AD-DEC einer Modulationseinrichtung MOD zugeleitet, entsprechend dem angewandten Übertragungsverfahren umgesetzt und als modulierte Sendeinformation MSIF parallel an alle Sendeverstärker SV der einzelnen Anschlussleitungen, z.B. L1 bis L4, zugeleitet. Umgekehrt werden auf den Anschlussleitungen L1 bis L4 eintreffende modulierte Empfangsinformationen MEIF über den Leitungsauswahlschalter L-AW einer Demodulationseinrichtung DEM zugeleitet, demoduliert und als binäre Empfangsinformation BEIF über die Empfangsdatenleitung 104 bzw. D2 der Schnittstelle V.24 weitergeleitet.

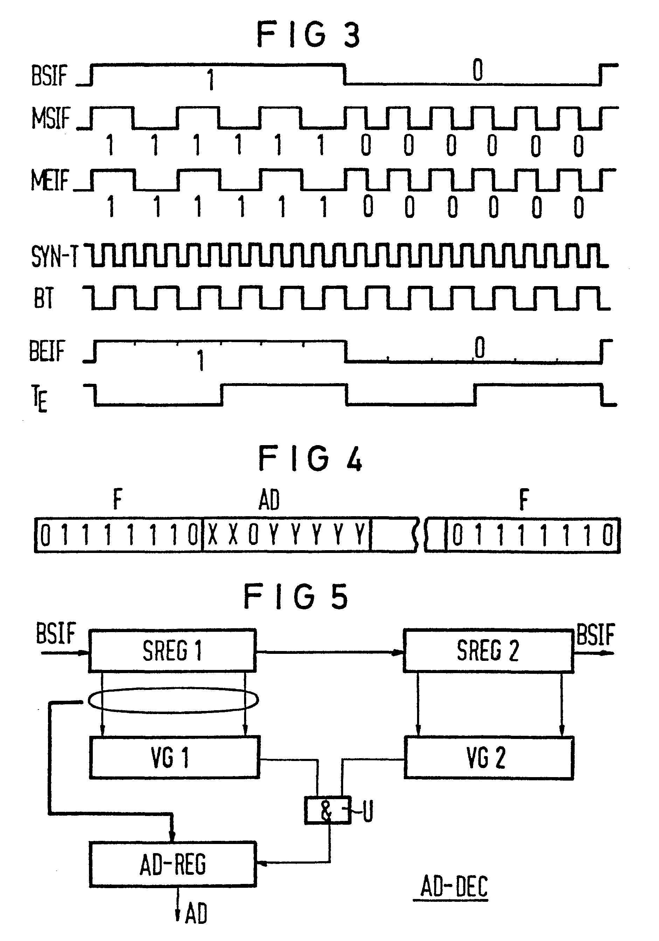

Als Übertragungsverfahren wird zweckmässig ein Basisband-Übertragungsverfahren verwendet, bei dem der Gleichstromanteil durch entsprechende Codierung der Daten entfällt, so dass Trennübertrager in die Verbindungen eingefügt werden können - P. Bocker: «Datenübertragung», 1978, Bd. 1, Abschn. 4.2, Seiten 120 ff. Diese Trennverstärker werden zweckmässig den Sende- und Empfangsverstärkern SV und EV zugeordnet. Im vorliegenden Fall ist das bekannte «Coded-Diphase»-Verfahren zugrundegelegt, bei dem — wie die Zeilen MSIF und MEIF in Fig. 3 erkennen lassen — jeder Bitwechsel durch einen Signalumschlag und einer der beiden Binärwerte 1 bzw. 0 zusätzlich auch durch einen Signalumschlag in der Mitte des Bits gekennzeichnet wird.

Zur Ableitung der benötigten Takte sind mehrere Taktgeneratoren vorgesehen. Der Taktgenerator TG liefert als Oszillator mit einer konstanten Frequenz einen Grundtakt, der auf der Sendeseite einen Sendetaktgenerator S-TG steuert, der die benötigten Sendetakte in an sich bekannter Weise durch Untersetzung mittels Zähler in Verbindung mit logischen Verknüpfungselementen bereitstellt. Auf der Empfangsseite steuert der Grundtaktgenerator TG einen Synchronisiertaktgenerator SYNTG, der aus den empfangenen modulierten Empfangsinformationen MEIF einen Synchrontakt SYN-T für die Demodulationseinrichtung DEM ableitet. Der Synchrontaktgenerator SYN-TG kann in vorteilhafter Weise entsprechend der deutschen Patentanmeldung P 32 34 576.3 vom 17.09.82 und die Demodulationseinrichtung DEM in vorteilhafter Weise entsprechend der deutschen Patentanmeldung P 32 35 429.3 vom 23.09.82 ausgebildet sein.

Der weiterhin gezeigte Geschwindigkeitsumschalter G-UM dient in an sich bekannter Weise zur Anpassung der Übertragungsgeschwindigkeit auf den Anschlussleitungen L, z.B. 230,3 kbit/s, an die Übertragungsgeschwindigkeit des Blockpuffers BP, z.B. 38,4 kbit/s, wobei ein gesonderter Empfangstaktgenerator E-TG abhängig vom Bittakt BT der Demodulationseinrichtung und synchronisiert durch die binäre Empfangsinformation BEIF den Empfangstakt $T_E$ auf der Schnittstellenleitung 115 (T4) liefert, während der Sendetakt $T_S$ auf der Schnittstellenleitung 114 (T2) unmittelbar vom Sendetaktgenerator S-TG mitgeliefert wird.

Die Auswirkung der Geschwindigkeitsanpassung durch den Umschalter G-UM lässt sich für ein Verhältnis 1:6 aus dem Impulsdiagramm von Fig. 3 ersehen. Demzufolge wird ein Bit der binären Sendeinformation BSIF jeweils in sechs Bits der modulierten Sendeinformation MSIF und umgekehrt sechs gleichwertige Bits der modulierten Empfangsinformation MEIF in ein Bit der binären Empfangsinformation BEIF umgewandelt. Weiterhin gezeigt sind der zugehörige Synchrontakt SYN-T und der Bittakt BT sowie der davon abgeleitete Empfangstakt $T_E$.

Fig. 4 zeigt die relevanten Teile eines Datenübertragungsblockes für die HDLC-Prozedur. Jeder Block wird dabei durch gleichartige Bitkombinationen, nämlich 01111110 als Flag F eingeleitet und abgeschlossen. Zwischen solchen Blöcken können zur Füllung weitere solche Flags oder aber eine Dauer-Eins gesendet werden. Auf das eröffnende Flag F eines Datenübertragungsblockes folgt immer eine Adresse AD, bestehend aus acht Bit, von denen beispielsweise lediglich die fünf niederwertigsten Bit Y die Adresse bilden, während das sechste Bit immer eine Null ist und die beiden letzten Bit X ohne Bedeutung sind. Die Adresse ist also eindeutig von einem Flag F und einer Dauer-Eins unterscheidbar. Diese Bedingung liegt daher auch der Adressenauswerteschaltung AD-DEC von Fig. 2 zugrunde, die in Fig. 5 im einzelnen dargestellt ist.

Die binäre Sendeinformation BSIF durchläuft nacheinander zwei 8-Bit-Schieberegister SREG1 und SREG2. Beide Schieberegister sind mit einem Vergleicher VG1 bzw. VG2 gekoppelt, die die von den Schieberegistern angebotenen 8-Bit-Kombinationen fortlaufend mit vorgegebenen Kontrollkombinationen vergleichen. Mit dem Vergleicher VG2 wird dabei überprüft, ob im zugehörigen Schieberegister SREG2 gerade ein Flag F, also die Bitkombination 01111110, zwischengespeichert ist, und mit dem Vergleicher VG1 wird überprüft, ob im zugehörigen Schieberegister SREG1 eine von der Flag-Kombination und der Dauer-Eins abweichende Kombination zwischengespeichert ist. Nur wenn die Kontrollbedingungen beider Vergleicher VG1 und VG2 gleichzeitig erfüllt sind, stellt die im Schieberegister SREG1 gespeicherte Kombination eine Adresse AD dar, die auszuwerten ist. Demzufolge wird anhand der entsprechenden Kontrollsignale der beiden Vergleicher über das UND-Glied U das Adressenregister AD-REG aufnahmebereit geschaltet und die Adresse AD aus dem Schieberegister SREG1 übernommen und der Leitungsauswahlschalter L-AW für die ankommende Anschlussleitung entsprechend eingestellt.

Im Gegensatz zum üblichen Schnittstellenvervielfacher, wie er beispielsweise in der Siemens-Druckschrift «TRANSDATA 8906-2», Bestell-Nummer F-238/403.18, z.B. Bild 14 auf Seite 26, beschrieben ist, erfolgt also die Durchschaltung der Empfangsleitungen nicht abhängig vom Schnittstellensignal 109 (M5) der angeschlossenen Datenendeinrichtungen DEE, sondern abhängig von der die Datenübertragung steuernden Datenverarbeitungsanlage DVA anhand der in den Sendeinformationen enthaltenen Adresse für die jeweils aufgerufene Datenendeinrichtung. Auf diese Weise wird die Voraussetzung geschaffen, dass die benötigten Modems auf der Datenendeinrichtungsseite des Schnittstellenvervielfachers in diesen einbezogen und damit zentralisiert werden können, ohne dass die Transparenz des Übertragungsweges beeinträchtigt wird. Der Aufwand für die Datenübertragung vermindert sich damit bei grösserer Entfernungsunabhängigkeit der im lokalen Bereich anschliessbaren Datenendeinrichtung ganz erheblich.

## Patentansprüche

1. Anordnung zur Übertragung von Daten zwischen einer Datenverarbeitungsanlage (DVA) und mehreren Datenendeinrichtungen (DEE) im lokalen Bereich unter Verwendung eines über eine festgelegte Schnittstelle (V.24) an die Ausgabeeinrichtung (BP) der Datenverarbeitungsanlage (DVA) angeschlossenen Netzknotens (NK) mit einer genormten Prozedur, z.B. HDLC, bei der die Adresse (AD) der jeweils gewünschten Datenendeinrichtung (DEE) in den übertragenen Daten enthalten sind und jede Daten-Endeinrichtung (DEE) jeweils nur nach Aufruf durch die Datenverarbeitungsanlage (DVA) Daten zu dieser sendet, dadurch gekennzeichnet, dass im Netzknoten (NK) die von der Datenverarbeitungsanlage (DVA) gesendeten Daten über eine Adressenauswerteschaltung (AD-DEC) an eine zentrale Modulationseinrichtung (MOD) und von dort parallel an den zu den Datenendeinrichtungen (DEE) führenden Leitungen (L) zugeordnete Sendeverstärker (SV) weitergeleitet werden, und dass die Adressenauswerteschaltung (AD-DEC) mit einem Leitungsauswahlschalter (L-AW) gekoppelt ist, der aufgrund der jeweils letzten aus den Sendedaten abgeleiteten Adresse den der ankommenden Leitung (z.B. L1) der zugehörigen Datenendeinrichtung zugeordneten Empfangsverstärker (EV) mit einer zentralen Demodulationseinrichtung (DEM) verbindet, von der die demodulierten Daten an die Datenverarbeitungsanlage (DVA) weitergeleitet werden.

2. Anordnung nach Anspruch 1, dadurch gekennzeichnet, dass die Modulations- und Demodulationseinrichtung (MOD und DEM) entsprechend einem der bekannten Basisbandübertragungsverfahren, z.B. «Coded-Diphase»-Verfahren, arbeiten.

3. Anordnung nach Anspruch 2, dadurch gekennzeichnet, dass ausgehend von einer einheitlichen Übertragungsgeschwindigkeit (z.B. 230,4 kbit/s) auf den Anschlussleitungen (L) zu den Datenendeinrichtungen (DEE) die Übertragungsgeschwindigkeit (z.B. 38,4 kbit/s) auf den Schnittstellenleitungen zur Datenverarbeitungsanlage (DVA) durch voreinstellbare Steuerschalter (G-UM) anpassbar ist, dass entsprechend dem Verhältnis, z.B. 6:1, beider Übertragungsgeschwindigkeiten ein Sendebit der Datenverarbeitungsanlage jeweils in entsprechend viele Übertragungsbits bzw. entsprechend viele Übertragungsbits jeweils in ein Empfangsbit für die Datenverarbeitungsanlage umgewandelt werden und dass der zur Datenverarbeitungsanlage (DVA) gesendete Sende- und Empfangstakt ($T_S$ und $T_E$) entsprechend geändert wird.

4. Anordnung nach einem der Ansprüche 1 bis 3, dadurch gekennzeichnet, dass die Datenübertragung nach dem HDLC-Verfahren erfolgt, dass in der Adressenauswerteeinrichtung (AD-DEC) zwei in Reihe geschaltete Schieberegister (SREG1 und SREG2) für jeweils acht Bit vorgesehen sind, dass jedes Schieberegister mit einem voreingestellten Vergleicher (VG1 bzw. VG2) gekoppelt ist, von denen der eine (VG2) in Verbindung mit dem zweiten nachgeschalteten Schieberegister (SREG2) bei Vorliegen eines Blockbegrenzungszeichens (F) und der andere (VG1) in Verbindung mit dem ersten Schieberegister (SREG1) beim Nichtvorliegen eines Blockbegrenzungszeichens (F) oder einer Dauer-Eins ein Steuersignal liefert, und dass bei gleichzeitigem Auftreten der Steuersignale beider Vergleicher (VG1 und VG2) die im ersten Schieberegister (SREG1) enthaltene Information als Adresse (AD) in ein drittes Register (AD-REG) übernommen wird, durch das der Leitungsauswahlschalter (L-AW) eingestellt wird.

**Claims**

1. An arrangement for transmitting data between a data processing system (DVA) and a plurality of data terminals (DEE) in the local range, using a network code (NK), which is connected via a fixed interface (V.24) to the output device (BP) of the data processing system (DVA), in accordance with a standardised procedure, e.g. HDLC, in which the addresses (AD) of the required data terminal (DEE) are contained in the transmitted data and not until it has been called up by the data processing system (DVA) does each data terminal (DEE) transmit data thereto, characterised in that in the network node (NK) the items of data transmitted from the data processing system (DVA) are forwarded via an address analysis circuit (AD-DEC) to a control modulation device (MOD) and from there, in parallel, to transmitting amplifiers (SV) which are assigned to the lines (L) which lead to the data terminals (DEE), and that the address analysis circuit (AD-DEC) is coupled to a line selector switch (L-AW) which, on the basis of the last address derived from the transmitted data, connects the receiving amplifier (EV), which is assigned to the incoming line (e.g. L1) of the associated data terminal, to a central demodulation device (DEM) from which the demodulated data items are forwarded to the data processing system (DVA).

2. An arrangement as claimed in claim 1, characterised in that the modulation device and demodulation device (MOD and DEM) operate in accordance with one of the known base band transmission methods, e.g. the coded-diphase method.

3. An arrangement as claimed in claim 2, characterised in that, commencing from a standard transmission speed (e.g. 230.4 kbit/s) on the connection lines (L) to the data terminals (DEE), the transmission speed (e.g. 38.4 kbit/s) on the interface lines to the data data processing system (DVA) can be adapted by means of pre-set control switches (G-UM), that in accordance with the ratio, e.g. 6:1, of the two transmission speeds one transmitted bit of the data processing system is converted into a corresponding number of transmission bits and similarly a plurality of transmission bits are converted into one received bit for the data processing system and that the transmitting- and receiving clock signal ($T_S$ and $T_E$), which is transmitted to the data processing system (DVA), is altered accordingly.

4. An arrangement as claimed in one of claims 1 to 3, characterised in that the data transmission takes place in accordance with the HDLC-method, that in the address analysis device (AD-DEC) two series connected shift registers (SREG1 and SREG2) are provided, each for eight bits, that each shift register is coupled to a pre-set comparator (VG1 and VG2) of which one (VG2), in combination with the second, following shift register (SREG2) suplies a control signal in the presence of a block limiting signal (F) and the other (VG1), in combination with the first shift register (SREG1), supplies a control signal in the absence of a block limiting signal (F) or a continuous One, and that when the control signals of the two comparators (VG1 and VG2) ooccur simultaneously the information contained in the first shift register (SREG1) is transferred, as address (AD), into a third shift register (AD-REG) by which the line selector switch (L-AW) is set.

**Revendications**

1. Dispositif pour la transmission de données entre une installation de traitement des données (DVA) et plusieurs terminaux de données (DEE) en zone locale, avec utilisation d'un noeud de réseau (NK) relié, par lintermédiaire d'un interface déterminé (V.24), au dispositif d'émission (BP) de l'installation de traitement des données (DVA), avec une procédure normalisée, par exemple HDLC, dans laquelle les adresses (AD) du terminal (DEE) sollicité sont contenues dans les données transmises, chaque terminal (DEE) n'émettand des données à l'installation de traitement des données (DVA) qu'après appel par celles-ci, caractérisé par le fait qu'au noeud du réseau (NK), les données émises par l'installation de traitement des données (DVA) sont retransmises, par l'intermédiaire d'un circuit d'évaluation des adresses (AD-DEC), à un dispositif central de modulation (MOD) et, de là, en parallèle, à l'amplificateur d'émission (SV) associé aux lignes (L) menant aux terminaux (DEE), et que le circuit d'évaluation des adresses (AD-DEC) est couplé à un commutateur de sélection des lignes (L-AW) qui relie, en fonction de la dernière adresse dérivée des données émises, l'amplificateur de réception (EV) associé à la ligne d'entrée (par exemple L1) du terminal correspondant, à un dispositif central de démodulation (DEM) à partir duquel les données démodulées sont retransmises à l'installation de traitement des données (DVA).

2. Dispositif selon la revendication 1, caractérisé par le fait que le dispositif de modulation et de démodulation (MOD et DEM) fonctionnent suivant l'une des procédés connus à transmission de bandes de base, par exemple un procédé dit «Coded-Diphase».

3. Dispositif selon la revendication 2, caractérisé par le fait qu'en partant d'une vitesse de transmission uniforme (de par exemple 230,4 kbits/s) sur les lignes de liaison menant aux terminaux (DEE), la vitesse de transmission (de par exemple 38,4 kbits/s) sur les lignes d'interface menant à l'installation de traitement des données, est adaptable à l'aide de commutateurs de commande préréglables (G-UM), qu'en fontion du rapport, par exemple 6:1, entre les deux vitesses de transmission, un bit d'émission de l'installation de traitement des données est transformé en plusieurs bits de transmission correspondants ou plusieurs bits de transmission sont transformés en un bit de réception pour l'installation de traitement des données, et que la cadence d'émission envoyée à l'installation de traitement des données (DVA) et la cadence de réception ($T_S$ et $T_E$) sont modifiées de façon correspondante.

4. Dispositif selon l'une des revendications 1 à 3, caractérisé par le fait que la transmission des données a lieu selon le procédé HDLC, que dans le dispositif d'évaluation des adresses (AD-DEC) on prévoit deux registres à décalage (SREG1 et SREG2) montés en série chacun d'eux étant prévu pour huit bits, que chaque registre à décalage est couplé à un comparateur préréglé (VG1, VG2) dont l'un (VG2) fournit, en liaison avec le second registre à décalage aval (SREG2), en présence d'un signe de limitation de bloc (F) et l'autre (VG1) fournit, en liaison avec le premier registre à décalage (SREG1) lors de l'absence d'un signe de limitation de bloc (F) ou d'un permanent, un signal de commande, et que dans le cas de l'apparition simultanée des signaux de commande des deux comparateurs (VG1 et VG2), l'information qui est contenue dans le premier registre à décalage (SREG1) est prise en charge, en tant qu'adresse (AD), dans un troisième registre (AS-REG) à l'aide duquel le commutateur de sélection de lignes (L-AW) est réglé.

# FIG 1

# FIG 2

NK

# F I G 3

# F I G 4

# F I G 5

AD-DEC